# EUROPEAN PATENT SPECIFICATION

(11) **EP 4 058 715 B1**
(45) Date of publication and mention of the grant of the patent: **30.09.2026**
(21) Application number: 20816596.9
(22) Date of filing: 11.11.2020
(51) Int. Cl.: F16L 59/153, G01M 3/00

(54) **PRE-INSULATED PIPE**
VORISOLIERTES ROHR
TUYAU THERMIQUEMENT ISOLÉ

(30) Priority: 11.11.2019 IT 201900020781
(43) Date of publication of application: 21.09.2022
(73) Proprietor: Ecotech S.r.l., 73100 Lecce (LE) (IT)
(72) Inventor: TONOLI, Lorenzo, 73100 Lecce [LE] (IT); FARINA, Stefano Fedele, 73100 Lecce [LE] (IT)
(74) Representative: M. Zardi & Co S.A.
(86) International application number: PCT/IB2020/060603
(87) International publication number: WO 2021/094937

(56) References cited:
- WO-A1-03/006872
- WO-A1-03/060454
- WO-A1-2014/122278
- WO-A1-2014/134745
- DE-A1- 10 021 523
- DE-U1- 20 011 306
- DE-U1- 9 308 602
- FR-A1- 2 451 261

## Description

The present invention relates to a flexible thermally pre-insulated pipe, in particular for the transport of a heated fluid.

Known from the prior art document EP1288558A1 is a conduit for the transport of a thermal exchange fluid, for example for use in remote heating systems. Such conduit comprises an internal conduit for the transport of the fluid, an expanded thermal insulation - preferably made of expanded polyisocyanurate - arranged around the internal conduit, a stretched sheet strip, a polymeric strip wound in spirals around the stretched sheet strip, and an outer coating which encloses said thermal insulation, said strip and said polymeric strip.

One of the main drawbacks related to conduits manufactured according to the disclosure of EP1288558A1 lies the fragility of the thermal insulation made of expanded polyisocyanurate.

In particular, such insulated conduits are produced "in-line" (i.e. along their main development direction) but - after the completion of the in-line manufacturing, after the expansion and solidification of the insulation are complete - they are wound in reels that are logistically easier to store and to ship.

However, expanded polyisocyanurate is an extremely rigid thermosetting material when fully solidified, due to the complex polymer structure conferred by the isocyanurate trimer.

As a result, when a conduit manufactured according to the disclosure of the prior art document EP1288558A1, is first wound in a reel, and even more so subsequently straightened in order to be laid, the expanded thermal insulation is seriously damaged despite the presence of the stretched sheet strip, due to the rigidity and brittle rupture of expanded isocyanurate.

The prior art document DE 93 08 602 U1 discloses a thermally insulated flexible conduit comprising a stainless-steel corrugated pipe (1) surrounded by an insulation layer (3). A further insulation layer (4) made of polyethylene or polyurethane foam is arranged above the insulation layer (3). A tubular element made of an aluminium film may be present around the insulation layer (3). In such embodiment, the insulation layer (3) is a foam resistant at least up to a temperature of 130°C and provided with a coefficient of thermal exchange less than 0,035 W/mK. However, according to the technical knowledge at the date of the prior art document DE 93 08 602 U1, such features could only be achieved by rigid closed-cell foams made of polyurethane or isocyanurate. The use of rigid foams in the flexible conduit of the prior art document DE 93 08 602 U1 is therefore not encouraged as it may limit the improved flexibility of such conduit. Furthermore, such document does not indicate which is a suitable radial thickness of the innermost insulation layer.

The prior art document FR2451261A1, in particular in the embodiment of Figure 2, discloses a rigid pipe (10) given that it is free of corrugations, preferably made of steel, surrounded by an inner layer (20) and by an outer layer (22), wherein said layers are both made of expanded polyurethane but formulated with different densities so as to withstand different operating temperatures. On page 6, lines 25-30, the prior art document FR2451261A1 explains that the radial thickness of the inner layer made of expanded polyurethane may be comprised from 2,54 cm to 15,24 cm.

Thus, there arises the need to have a flexible pre-insulated pipe capable of being wound in a reel, without rapturing as frequently as it currently occurs with the conduits of the prior art.

After a long and intense research and development activity the Applicant developed a flexible pre-insulated pipe capable of providing an adequate response to the current limits, drawbacks and problems.

In particular, the inventors of the present invention thought of arranging around the tubular body in which the heated fluid flows two different layers, a more internal heat-resistant layer and a more external thermal barrier layer: the first heat-resistant layer being more fragile and with poorer thermal insulation features, but being resistant to the high temperatures of the fluid inside the tubular body. The second thermal barrier layer being flexible and capable of providing high thermal insulation, but with lower heat resistance characteristics with respect to the first layer.

Thus, the present inventors understood the need to protect the second thermal barrier layer by means of the first heat-resistant layer, and they also found that, in the flexible pipe subject of the present invention, possible fractures in the first heat-resistant layer can be tolerated provided that the temperature transmitted by the fluid through the thickness of said first layer is lowered sufficiently enough not to damage the second thermal barrier layer, for example due to carbonisation phenomena.

Therefore, forming an object of the present invention is a flexible pre-insulated pipe, having the characteristics as defined in the attached claims.

Preferred embodiments of the present invention will be described hereinafter by way of non-limiting example with reference to the attached drawings, wherein:
- figure 1 shows a longitudinal section of a pre-insulated pipe, subject of the present invention, according to a first possible embodiment;
- figure 2 illustrates a longitudinal section of a pre-insulated pipe, subject of the present invention, according to a second possible embodiment;
- figures 3, 4, 5, 6, 7, 8 represent orthogonal sections of pre-insulated pipes, subject of the present invention, according to further possible embodiments.

It should be noted that, identical or corresponding characteristics will correspond to the same reference numeral in the attached drawings. Furthermore, it should also be pointed out that the variants illustrated in the figures are only schematisations, not to scale, so that the dimensional ratios of the layers and of the parts discussed hereinafter could be very different with respect to the variants shown.

Thus, forming an object of the present invention is a flexible pre-insulated pipe 1 comprising at least an inner tubular body 2, a first heat-resistant layer 6, a second thermal barrier layer 8, a separation wall 10 between the first heat-resistant layer 6 and the second barrier layer 8, and an outer tubular body 12.

In this description the term "flexible" means a flexibility of the pre-insulated pipe 1 sufficient to allow it to be wound on a storage reel. In other words, the term "flexible" indicates that the pre-insulated pipe 1 may be wound in coils around a central axis, wherein the pre-insulated pipe 1 wound in coils has a radius of curvature such to circumscribe an inner diameter (inner coil diameter, which lies in an orthogonal plane with respect to the central axis) comprised from 0,8 m to 4,0 m, preferably comprised from 1,0 m to 3,0 m, even more preferably comprised from 1,0 m to 2,8 m. Preferably, said inner diameter is defined by a core of the storage reel.

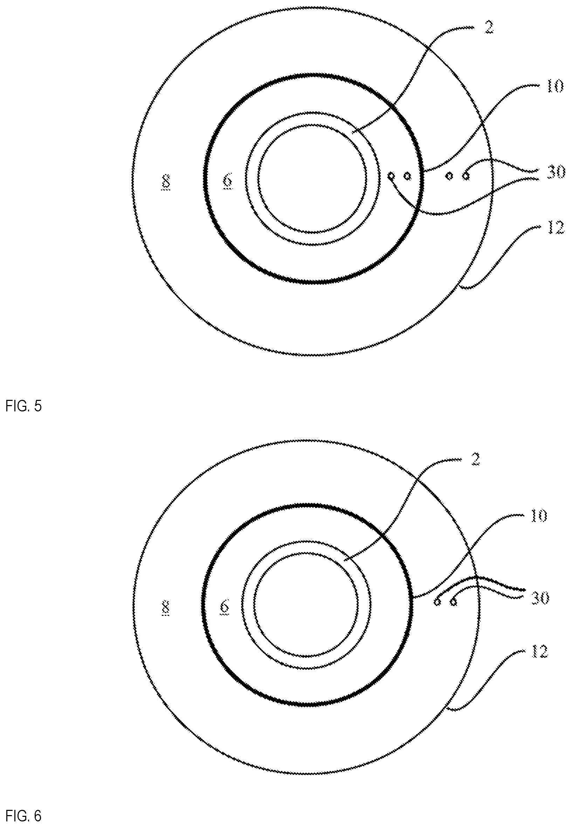

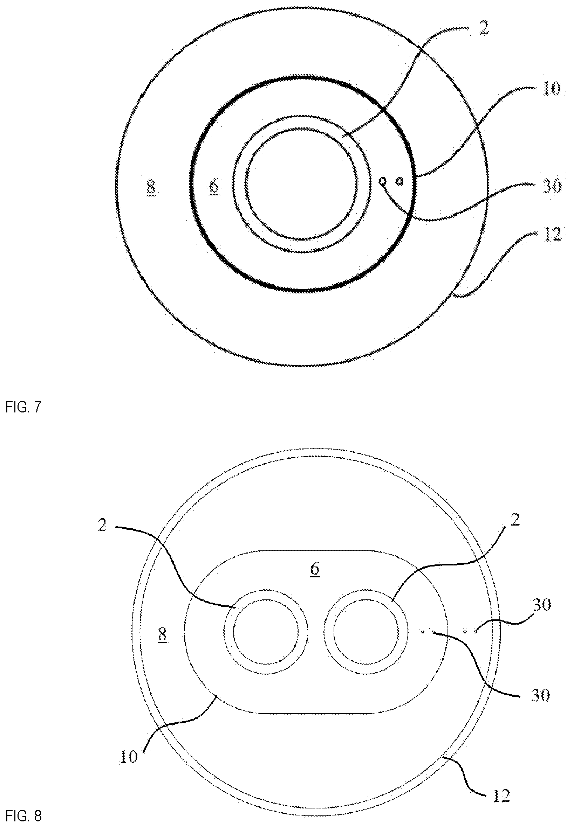

According to different embodiments, the flexible pre-insulated pipe 1 comprises a single inner tubular body 2, or a pair of inner tubular bodies 2 arranged adjacent to each other. By way of example, see figure 5 and figure 8, respectively.

In the presence of two inner tubular bodies 2, said bodies 2 could be at contact with each other, or they could be separated - for example as shown schematically in figure 8 - from the first heat-resistant layer 6. Preferably, the first heat-resistant layer 6 - in a cross-section orthogonal to a longitudinal development axis X of the flexible pre-insulated pipe 1 - has a substantially ellipsoidal or ovoid cross-section.

The inner tubular body 2 develops around a longitudinal development axis X to delimit a through-flow conduit 4 for a heated fluid, preferably a fluid having a temperature equal to or higher than 120°C, more preferably steam under pressure having a temperature equal to or higher than 120°C, even more preferably comprised from 120°C to 150°C.

Preferably, the inner tubular body 2 is made of a metal, more preferably iron or steel.

Even more preferably, the inner tubular body 2 is corrugated along the longitudinal development axis X, i.e. it comprises - in longitudinal section - an undulated profile.

The longitudinal development axis X defines an axial direction along or parallel to said axis X, and it defines a radial direction in a plane orthogonal to said axis X. Therefore, unless specified otherwise, the expressions "axial" and "radial" will always refer to the longitudinal development axis X. Furthermore, the expressions "inner" or "outer" will have relative meaning to indicate - respectively - parts, components or surfaces radially closer to or facing the longitudinal development axis X, or radially farther away from or facing the opposite side of said axis X.

Preferably, the first heat-resistant layer 6 is at thermal contact with the inner tubular body 2, for example the latter being directly at contact with said first layer 6.

The first heat-resistant layer 6 is resistant to a temperature of at least 120°C, i.e. equal to or higher than 120°C, preferably comprised from 120°C to 150°C. The expression "heat-resistant" therefore means that the first layer 6 is capable of withstanding heating at said temperature without undergoing substantial deterioration.

The first heat-resistant layer 6 is made of an expanded thermosetting polymer and it surrounds the inner tubular body 2 in a prevalent or substantially complete manner.

The function of the first heat-resistant layer 6 is, *inter alia,* to create a physical partition between the inner tubular body 2 and the second thermal barrier layer 8, and to establish a temperature gradient through the thickness thereof. In the present description, the expression "temperature gradient" is used to indicate a variation (or, better to say, a decrease) in temperature along a radial direction traversing the thickness of the first heat-resistant layer 6. In other words, in the thickness of the first heat-resistant layer 6 a temperature decrease from a radially more internal position to a radially more external position occurs. Thus, in the first heat-resistant layer 6 a temperature difference between a radially more internal surface and a radially more outer surface of said first heat-resistant layer 6 is established, said difference being measurable at said surfaces.

Preferably, the first heat-resistant layer 6 is at least partially made of expanded polyisocyanurate or expanded phenolic resin.

In this description, the expression phenolic resin refers is used to indicate a reaction product in basic catalysis between an aldehyde and phenol, preferably between formaldehyde and phenol, more preferably wherein an [aldehyde] : [phenol] by mole ratio is greater than 1.

The second thermal barrier layer 8 is at least partially made of expanded polyurethane, and it surrounds the first heat-resistant layer 6 in a prevalent or substantially complete manner.

Thus, the first heat-resistant layer 6 is configured to protect the expanded polyurethane, given that it is interposed between the inner tubular body 2 and the second thermal barrier layer 8.

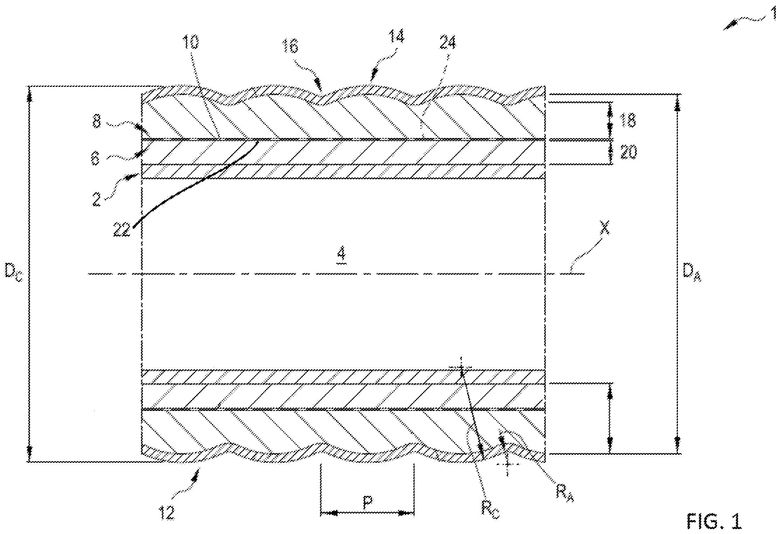

According to an embodiment, the separation wall 10 is substantially tubular, i.e. hollow cylindrical. For example, see figure 1.

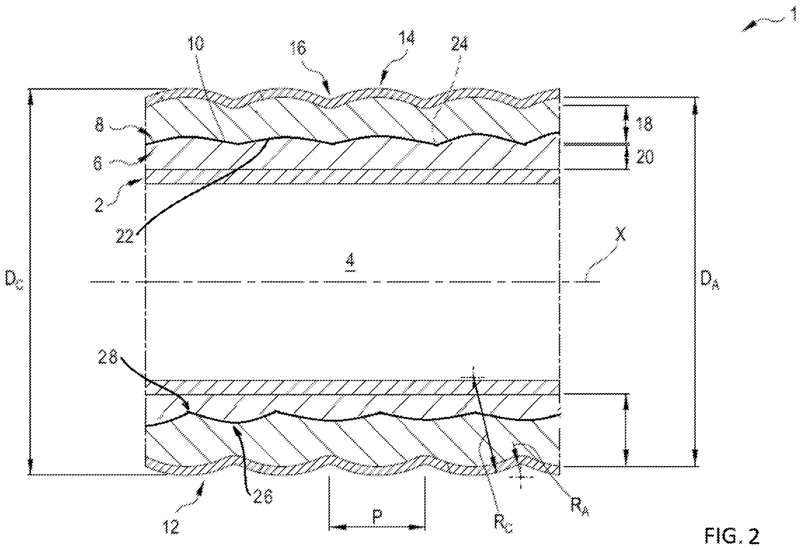

According to another embodiment, the separation wall 10 is corrugated, preferably in a longitudinal direction or section. For example, see figure 2.

Preferably, the separation wall 10 is delimited by an inner surface 22 facing the first heat-resistant layer 6 and by an outer surface 24 facing the second thermal barrier layer 8. According to such variant, the inner surface 22 and the outer surface 24 are preferably electrostatically charged (for example through the "Crown discharge" effect) so that said first heat-resistant layer 6 and said second thermal barrier layer 8 adhere to said surfaces 22, 24.

Therefore, this embodiment does not use adhesive substances at the separation wall 10, given that such substances would be difficult to apply on the expanded polymeric substances during the foaming process. It should be pointed out that, in the flexible pre-insulated pipe 1, the electrostatic charge of the inner surface 22 and of the outer surface 24 could be considerably reduced, until it can no longer be measured, due to the contact of such surfaces 22, 24 with said expanded polymeric substances (which are foam fluid precursors of the first heat-resistant layer 6 and of the second thermal barrier layer 8), and due to a reduction in electrostatic charge resulting from said contact. Nevertheless, before such contact with said foam fluid precursors, said electrostatic charge is present and it can be measured.

According to another embodiment, the separation wall 10 comprises - in longitudinal section - an alternation of second ridges 26 and second depressions 28 connected to each other through substantially straight connection sections. Preferably, said second ridges 26 and said second depressions 28 form a mechanical block against possible axial movements or sliding between the first heat-resistant layer 6 and the second thermal barrier layer 8. As a matter of fact, the presence of said ridges and said depressions creates a geometric coupling between the first heat-resistant layer 6 and the second thermal barrier layer 8. More preferably, said second ridges 26 penetrate into the thickness of the second thermal barrier layer 8, and said second depressions 28 penetrate into the first heat-resistant layer 6.

According to different embodiments, the separation wall 10 could comprise at least one metal layer (preferably made of aluminium) or an ethylene-vinyl-alcohol (EVOH) layer. By way of example, the separation wall 10 could comprise said metal layer embedded in two layers (an inner layer and an outer layer) of polyethylene (PE) or polypropylene (PP). By way of further example, the separation wall 10 could comprise said EVOH layer embedded in two layers (an inner layer and an outer layer) of polyethylene (PE) or polypropylene (PP). Still by way of further example, the separation wall 10 could comprise said metal layer (preferably made of aluminium) or said ethylene-vinyl-alcohol (EVOH) layer on the inner surface 22 facing the first heat-resistant layer 6 or on the outer surface 24 facing the second thermal barrier layer 8.

According to an embodiment (not covered by the present invention and not illustrated), the outer tubular body 12 encloses the second barrier layer 8 and it is delimited by circular cylindrical-shaped outer surfaces (i.e. without alternating ridges and depressions).

According to the invention, the outer tubular body 12 encloses the second barrier layer 8 and it comprises - in longitudinal section - an alternation of first ridges 14 and first depressions 16 connected to each other through substantially straight connection sections.

Preferably, the first ridges 14 have a radius of curvature R_{C}, and the first depressions 16 have a radius of curvature R_{A} and they penetrate into the thickness of the second thermal barrier layer 8.

According to a first embodiment, the R_{A} / R_{C} ratio is less than 1, preferably equal to or less than 0,9, more preferably comprised in the range from 0,1-0,9, even more preferably comprised in the range from 0,2-0,8. According to a second embodiment, the R_{A} / R_{C} ratio is substantially equal to 1.

According to a third embodiment, the R_{A} / R_{C} ratio is greater than 1.

Preferably, a pitch P between subsequent first depressions 16 is comprised in the range from 35-40 millimetres, being for example substantially 37,5 millimetres.

More preferably, the second depressions 28 of the separation wall 10 are arranged randomly with respect to the first depressions 16 of the outer tubular body 12.

According to an embodiment, the difference between a diameter D_{C} of the outer tubular body 12 on the first ridges 14 and a diameter D_{A} of the outer tubular body 12 on the first depressions 16 is equal to or less than 8,0 mm.

The difference D_{C}-D_{A} is preferably equal to or less than 8,0 mm for diameters of the pipe 1 comprised in the range from 63 mm to 202 mm, for example comprised from 120 mm to 202 mm, optionally comprised in the range from 63 mm to 89 mm and/or it is comprised from 91 mm to 202 mm.

According to another embodiment, said difference D_{C}-D_{A} is comprised in the range from 3,0 mm to 7,8 mm.

According to different embodiments, the outer tubular body 12 could comprise at least one metal layer (preferably made of aluminium) or an ethylene-vinyl-alcohol (EVOH) layer. By way of example, the outer tubular body 12 could comprise said metal layer embedded in two layers (an inner layer and an outer layer) of polyethylene (PE) or polypropylene (PP). By way of further example, the outer tubular body 12 could comprise said EVOH layer embedded in two layers (an inner layer and an outer layer) of polyethylene (PE) or polypropylene (PP).

A radial thickness 20 of the first heat-resistant layer 6 is comprised from 7 mm to 23 mm, more preferably comprised from 8 mm to 21 mm, even more preferably comprised from 9 mm to 19 mm, further preferably comprised from 9,5 mm and 18 mm. Advantageously, the radial thickness 20 of the first heat-resistant layer 6 is selected in a manner such that a temperature gradient (as defined above) through said thickness 20 is equal to or higher than 20°C, preferably comprised from 20°C to 50°C, more preferably comprised from 30°C to 40°C, even more preferably comprised from 32°C to 38°C.

By way of example, said radial thickness 20 of the first heat-resistant layer 6 can be evaluated by placing the heated fluid at a temperature equal to or higher than 120°C (for example 125°C) in the through-flow conduit 4 and measuring the temperature difference between the radially innermost surface (which will be substantially at the temperature of the heated fluid) and the radially outermost surface of said first heat-resistant layer 6. The radial thickness 20 must be increased in the event of temperature differences below 20°C.

According to different embodiments, the outer tubular body 12 could be made of a polymer, preferably polyethylene (PE) or polypropylene (PP).

Preferably, when said flexible pre-insulated pipe 1 is wound in a reel or in coils, the expanded thermosetting polymer of the first heat-resistant layer 6 is traversed by cracks. In this case, the separation wall 10 and/or the expanded polyurethane of the second thermal barrier layer 8 are arranged to close said cracks. Preferably, the radius of curvature of the flexible pre-insulated pipe 1 wound in a real or coils is such to circumscribe an inner coil diameter comprised from 0,8 m to 4,0 m, preferably comprised from 1,0 m to 3,0 m, even more preferably comprised from 1,0 m to 2,8 m.

It should be noted that, with respect to the prior art conduits (for example EP1288558A1), the present pipe 1 has a thickness of the first heat-resistant layer 6 which does not develop over the entire distance extending from the inner tubular body 2 up to the outer tubular body 12, but only for part of such distance. It is clear that any cracks can only reach up to the separation wall 10, but cannot propagate up to the outer tubular body 12.

In other words, said cracks remain contained in the first heat-resistant layer 6 and cannot create thermal bridges up to the external of the pipe 1.

Furthermore, it should also be pointed out that when any pipe or conduit is wound in a reel or in coils, an intrados thereof is subjected to a compression force, while an extrados thereof is subjected to a tractive force.

Thus, in conduits according to the prior art in which the expanded polyisocyanurate layer is very thick, said compression forces and tractive forces cause fractures and cracks flared outwards, so that thermal dissipation through said layer is facilitated and unstoppable.

On the other hand, in the pipe subject of the present invention, in which the first heat-resistant layer 6 is thinner (i.e. radially less extended), the cracks are less formed given that the compression forces and the opposite expansion forces are not of such an extent as to tear said first layer 6 in an extended manner. Moreover, even in the presence of cracks, the latter do not markedly divaricate radially toward the external of the pipe due to the smaller radial thickness of said first layer.

Lastly. In cracks, even in the presence of the separation wall 10 and/or the expanded polyurethane of the second thermal barrier layer 8 one or both of them are arranged to close said cracks. Thus, the gas released from the closed cells of the first heat-resistant layer 6 in any case remains confined either in said first layer 6 or in the perforations or micro-perforations 32 of the separation wall 10

The present pipe guarantees a good thermal seal thanks to the mechanisms outlined above.

According to the invention, the flexible pre-insulated pipe 1 comprises one or more electrical conductors 30 which develops(develop) along the longitudinal development axis X and are housed in the first heat-resistant layer 6 and/or in the second thermal barrier layer 8. Said one or more electrical conductors 30, preferably a first electrical conductor and a second electrical conductor, are part of a leak detection system. The leak detection system is preferably a reference resistance measurement system or a nordic system (as described such as for example in the prior art document WO03/060454).

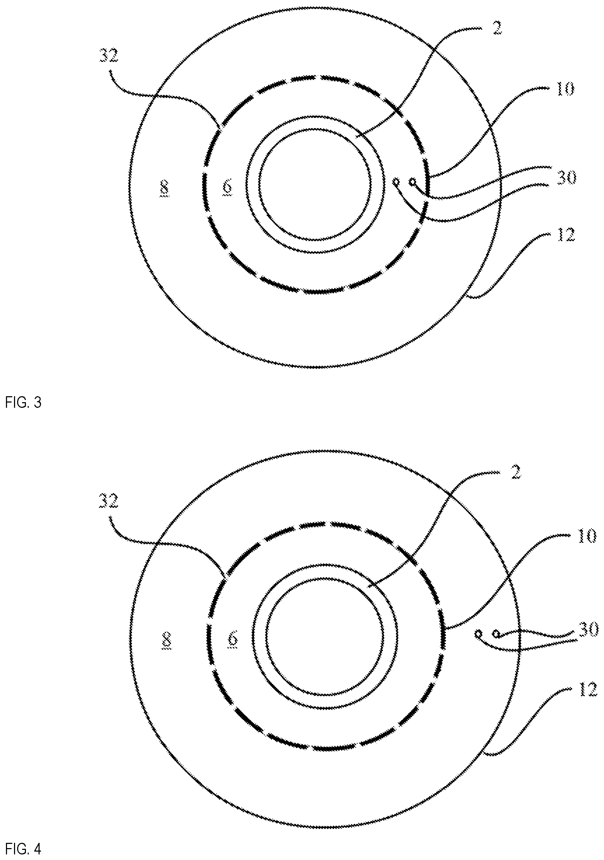

As a result, in a first embodiment (for example see figure 3), the first heat-resistant layer 6 houses one or two electrical conductors 30, while the second thermal barrier layer 8 is without electrical conductors.

In a second embodiment (for example see figure 4), the second thermal barrier layer 8 houses one or two electrical conductors 30, while the first heat-resistant layer 6 is without electrical conductors.

In a third embodiment (for example see figure 5), the first heat-resistant layer 6 and the second thermal barrier layer 8 each house one or two electrical conductors 30.

Preferably, when the flexible pre-insulated pipe 1 comprises a single electrical conductor 30, the inner tubular body 2 is made of a metal, more preferably iron or steel. Such solution is necessary for the inner tubular body 2 to act as an electrical conductor for closing a circuit.

For the embodiments in which two electrical conductors 30 are present, in a first embodiment the first electrical conductor and the second electrical conductor are both "naked" (i.e. without electrically insulating sheaths), spaced from each other, and they are arranged substantially at the same distance with respect to the inner tubular body 2.

In another embodiment, the first electrical conductor 30 and the second electrical conductor 30 are preferably intertwined or wound with each other in the form of a spiral, parallel to the longitudinal development axis X. Preferably, the first electrical conductor is surrounded by a continuous electrically insulating sheath, while the second electrical conductor is "naked" (i.e. without an electrically insulating sheath) or it is surrounded by an electrically insulating sheath traversed by perforations or micro-perforations.

In the presence of two electrical conductors 30, the flexible pre-insulated pipe 1 preferably comprises a tie rod to which the electrical conductors 30 are associated. The tie rod forms an elastically deformable element capable of extending as a result of tractive forces applied thereto (for example when the flexible pre-insulated pipe 1 is wound in coils or in a reel), thus partially reducing the tractive forces acting on the electrical conductors 30.

The tie rod may be in the form of a circular bar or be in the form of a strip.

In the presence of a fastener in the form of a circular bar, the electrical conductors 30 could be spirally wound (such as a cylindrical spiral) on an outer surface of such a circular bar. In the presence of tractive forces, the circular bar increases the length thereof and it reduces the diameter thereof due to the elastic deformation. The electrical conductors 30 are consequently subjected to traction to a lesser extent with respect to a flexible pre-insulated pipe 1 without a tie rod.

In the presence of a strip-shaped tie rod the electrical conductors 30 could be fixed or glued to a surface of the strip with an undulated pattern. Such undulations form a reserve of deformation which, in the presence of tractive forces, allows the electrical conductors to extend (reducing the depth of undulation) and it protects the electrical conductors from directly bearing tractive forces which could tear them.

Preferably, the tie rod is made of polyamide or polyvinyl chloride (PVC), or it is made of a paper material resistant to traction.

According to the invention, the separation wall 10 is traversed by perforations or micro-perforations 32. In different embodiments not covered by the invention the separation wall 10 is impermeable to the heated fluid and a liquid flowing in through the outer tubular body 12.

According to the invention, one or two electrical conductors 30 are housed in the first heat-resistant layer 6 or in the second thermal barrier layer 8, and the separation wall 10 is traversed by perforations or micro-perforations 32 so that said electrical conductor or said electrical conductors can be reached by the heated fluid flowing out of the inner tubular body 2 and by a liquid flowing in through the outer tubular body 12.

As a result, providing perforations obtained in the thickness of the separation wall 10 allows to detect - irrespective of where the electrical conductor or the electrical conductors 30 are arranged- possible fluid and liquid leaks.

As a matter of fact, according to a first embodiment, in the presence of perforations or micro-perforations 32 in the separation wall 10 and of an electrical conductor or electrical conductors 30 arranged in the first heat-resistant layer 6, the heated fluid flowing out of the inner tubular body 2 may reach the electrical conductor or the electrical conductors 30 arranged in the first heat-resistant layer. Similarly, the liquid (for example rainwater) flowing in through the outer tubular body 12, due to a tear in said body 12, may flow through the second thermal barrier layer 8, then through the perforations or micro-perforations of the separation wall 10, and lastly impregnating the first heat-resistant layer thus reaching the electrical conductor or the electrical conductors 30 housed therein.

According to a different embodiment, in the presence of perforations or micro-perforations 32 in the separation wall 10 and in the presence of an electrical conductor or electrical conductors 30 arranged in the second thermal barrier layer 8, the liquid (for example rainwater) flowing in through the outer tubular body 12, due to a tear in said body 12, may flow through the second thermal barrier layer 8 reaching the electrical conductor or the electrical conductors 30 arranged in said second layer 8. Similarly, the heated fluid leaving flowing out of the inner tubular body 2 may flow through the first heat-resistant layer 6, then flow through the perforations or micro-perforations of the separation wall 10, and lastly impregnating the second thermal barrier layer 8 thus reaching the electrical conductor or the electrical conductors 30 housed therein.

According to embodiments in which the first heat-resistant layer 6 and the second thermal barrier layer 8 each house one or two electrical conductors 30, the separation wall 10 is preferably, although not according to the present invention, impermeable to the heated fluid and to the liquid flowing in through the outer tubular body 12.

According to an embodiment not covered by the present invention, only the first heat-resistant layer 6 houses one or two electrical conductors 30 (this means that the second thermal barrier layer 8 is without electrical conductors) and the separation wall 10 is impermeable to the heated fluid and the liquid flowing in through the outer tubular body 12. For example, see figure 7.

According to another embodiment not covered by the present invention, only the second thermal barrier layer 8 houses one or two electrical conductors 30 (this means that the first heat-resistant layer 6 is without electrical conductors) and the separation wall 10 is impermeable to the heated fluid and the liquid flowing in through the outer tubular body 12. Preferably, only the second thermal barrier layer 8 houses two electric conductors 30. For example, see figure 6.

According to such embodiment, possible fluid and liquid leaks can be detected only in the second thermal barrier layer 8, due to the presence of one or two electrical conductors 30 housed in said second layer 8. Such a system is extremely advantageous given that - due to the water-imperviousness of the separation wall 10 - any leaks detected by the electrical conductor 30 or by the electrical conductors 30 will most likely be due to the liquid flowing in through the outer tubular body 12, given that the heated fluid is prevented from flowing through the impermeable separating wall 10.

In the presence of a detection of this type in which the wholeness of the inner tubular body 2 is not jeopardised, this entails that the outer tubular body 12 may be repaired in a scheduled manner and without particular urgency. As a matter of fact, in particular applications (for example in remote heating systems), extraordinary maintenance operations are expensive and difficult, hence this embodiment allows to promptly schedule a periodic routine maintenance operation following a detection of a leak (for example in summer, when residential remote heating systems are not running).

According to an innovative aspect of the present invention, the inventors succeeded in using an expanded polyisocyanurate or expanded phenolic resin in a flexible pipe, so as to find the right combination between the protection of the expanded polyurethane and the flexibility of the pipe.

Polyisocyanurate or phenolic resin are non-trivial choices for this type of application, given that in the field it is known that such expanded polymers confer rigidity and - when subjected to flexion - they rapture in a brittle manner, generating cracks and ensuing thermal bridges.

Advantageously, the pre-insulated pipe subject of the present invention allows to obtain - considering the same diameter - a greater degree of insulation with respect to conventional pipes, or the same degree of insulation with respect to conventional pipes but with smaller pre-insulated pipe diameters. Advantageously, the pre-insulated pipe according to the present invention has a double barrier layer, both with respect to the gases that could leak from the first heat-resistant layer and with respect to the gases that could leak from the second thermal barrier layer.

Advantageously, the pre-insulated pipe subject of the present invention was designed with the aim of reducing the tractive forces on the electrical conductors. In particular, in the presence of electrical conductors intertwined or wound to each other, an extension is facilitated by the undulated pattern of the two conductors which provides a deformation reserve. Even in the presence of a tie rod, the tractive forces are lower due to the longitudinal deformation of the tie rod or of the deformation reserve offered by the undulations formed at the tie rod.

Advantageously, the pre-insulated pipe subject of the present invention allows to schedule routine maintenance or prevention operations in the event of fluid leaks, in cases where an extraordinary maintenance operation was required conventionally.

Advantageously, the presence of an impermeable separation wall prevents the external humidity from reaching the outer tubular body, so that any tearing of the outer tubular body does not represent a risk factor for the sealing of the through duct.

Advantageously, the presence of one or two electrical conductors arranged in proximity of the inner tubular body inside the first heat-resistant layer allows to detect leaks of heated fluid from the through-flow conduit early, and therefore to prevent extensive damage (length-wise) on the layers outside the outer tubular body due to the heated and pressurised fluid.

Advantageously, the section of the first heat-resistant layer 6 was designed to ensure adequate thermal insulation and protection, without however compromising the overall flexibility of the pipe.

The embodiments of the aforementioned flexible pre-insulated pipe could be subjected, by a man skilled in the art, to replacements or modifications regarding the outlined characteristics depending on the needs as long as they fall within the scope of protection formalised in the following claims.

### LIST OF REFERENCE NUMBERS

| | | | |
|---|---|---|---|
| 1 | flexible pre-insulated pipe | 24 | outer surface of the separation wall |
| 2 | inner tubular body | 26 | second ridges |
| 4 | through-flow conduit | 28 | second depressions |
| 6 | first heat-resistant layer | 30 | electrical conductor |
| 8 | second thermal barrier layer | 32 | perforations or micro-perforations |
| 10 | separation wall | D_{A} | diameter of the tubular body outside the first depressions |
| 12 | outer tubular body | | |
| 14 | first ridges | D_{c} | diameter of the tubular body outside the first ridges |
| 16 | first depressions | P | pitch between subsequent first depressions |
| 18 | average radial thickness of the second thermal barrier layer | R_{AT} | radius of curvature of the first depressions |
| 20 | average radial thickness of the first heat-resistant layer | R_{C} | radius of curvature of the first ridges |
| 22 | inner surface of the separation wall | X | longitudinal development axis |

## Claims

1. A flexible pre-insulated pipe (1) comprising:
- at least one inner tubular body (2) which develops around a longitudinal development axis (X) to delimit a through-flow conduit (4) for a heated fluid;
- a first heat-resistant layer (6), made of an expanded thermosetting polymer, which surrounds the inner tubular body (2) in a prevalent or substantially complete manner;
- a second thermal barrier layer (8), at least partially made of expanded polyurethane, which surrounds the first heat-resistant layer (6);
- a separation wall (10) between the first heat-resistant layer (6) and the second barrier layer (8);
- an outer tubular body (12), which encloses the second thermal barrier layer (8) and comprises - in longitudinal section - an alternation of first ridges (14) and first depressions (16) connected to each other through straight connection sections;
wherein a radial thickness (20) of the first heat-resistant layer (6) is comprised from 7 mm to 23 mm and wherein said flexible pre-insulated pipe (1) comprises:
- one or more electrical conductors (30) which develops/develop along the longitudinal development axis (X) and are received in the first heat-resistant layer (6) and/or in the second thermal barrier layer (8), said one or more electric conductors (30) being part of a leak detection system;
one or two electric conductors (30) being housed in the first heat-resistant layer (6) or in the second thermal barrier layer (8), and wherein the separation wall (10) is traversed by perforations or micro-perforations (32), so that said electrical conductor or said electrical conductors can be reached by the heated fluid flowing out of the inner tubular body (2) and by a liquid flowing in through the outer tubular body (12).

2. The flexible pre-insulated pipe (1) according to the preceding claim, wherein said radial thickness (20) is comprised from 8 mm to 21 mm, more preferably comprised from 9 mm to 19 mm, even more preferably comprised from 9.5 mm to 18 mm.

3. The flexible pre-insulated pipe (1) according to the preceding claim, wherein said heated fluid in said through-flow conduit (4) has a temperature equal to or higher than 120°C, more preferably comprised from 120°C to 150°C, and wherein said radial thickness (20) is selected so that a temperature gradient through said thickness (20) is equal to or higher than 20°C, preferably comprised from 20°C to 50°C.

4. The flexible pre-insulated pipe (1) according to any one of the preceding claims, wherein - when said pipe (1) is wound in coils with a radius of curvature such to circumscribe an inner coil diameter comprised from 0.8 m to 4.0 m, preferably comprised from 1.0 m to 3.0 m, even more preferably comprised from 1.0 m to 2.8 m - said expanded thermosetting polymer of the first heat-resistant layer (6) is traversed by cracks, and wherein the separation wall (10) and/or the expanded polyurethane of the second thermal barrier layer (8) are arranged to close said cracks.

5. The flexible pre-insulated pipe (1) according to any one of the preceding claims, wherein the separation wall (10), preferably substantially tubular, is delimited by an inner surface (22) facing the first heat-resistant layer (6) and by an outer surface (24) facing the second thermal barrier layer (8), wherein said inner surface (22) and said outer surface (24) are electrostatically charged so that said layers (6, 8) adhere to said surfaces (22, 24).

6. The flexible pre-insulated pipe (1) according to any one of the preceding claims, wherein the separation wall (10) comprises - in longitudinal section - an alternation of second ridges (26) and second depressions (28) connected to each other through substantially straight connection sections, said second ridges (26) and second depressions (28) forming a mechanical block against axial movements between the first heat-resistant layer (6) and the second thermal barrier layer (8).

7. The flexible pre-insulated pipe (1) according to any one of the preceding claims, wherein the inner tubular body (2) is made of a metal, for example iron or steel, and it is corrugated along the longitudinal development axis (X).

8. The flexible pre-insulated pipe (1) according to any one of the preceding claims, wherein the separation wall (10) comprises at least one metal layer, preferably made of aluminium, or an ethylene-vinyl-alcohol (EVOH) layer, said layer being preferably embedded in two layers - an inner layer and an outer layer - of polyethylene (PE) or polypropylene (PP).

9. The flexible pre-insulated pipe (1) according to any one of the preceding claims, wherein at least two electrical conductors (30) are intertwined or wound with each other parallel to the longitudinal development axis (X).

10. The flexible pre-insulated pipe (1) according to any one of the preceding claims, comprising at least one tie rod to which there a pair of electrical conductors (30) is associated, wherein the tie rod forms an elastically deformable element capable of extending due to tractive forces applied thereto, thus partially reducing the tractive forces acting on the electrical conductors (30).

11. The flexible pre-insulated pipe (1) according to any one of the preceding claims, wherein said expanded thermosetting polymer of the first heat-resistant layer (6) is expanded polyisocyanurate.

12. The flexible pre-insulated pipe (1) according to any one of claims 1-10, wherein said expanded thermosetting polymer of the first heat-resistant layer (6) is expanded phenolic resin.

## Patentansprüche

1. Ein flexibles vorisoliertes Rohr (1), umfassend:
- mindestens einen inneren Rohrkörper (2), der sich um eine Längsachse (X) erstreckt, um einen Durchflusskanal (4) für ein erwärmtes Fluid zu begrenzen;
- eine erste hitzebeständige Schicht (6) aus einem expandierten duroplastischen Polymer, die den inneren Rohrkörper (2) überwiegend oder im Wesentlichen vollständig umgibt;
- eine zweite Wärmebarriereschicht (8), die zumindest teilweise aus expandiertem Polyurethan besteht und die erste hitzebeständige Schicht (6) umgibt;
- eine Trennwand (10) zwischen der ersten hitzebeständigen Schicht (6) und der zweiten Wärmebarriereschicht (8);
- einen äußeren Rohrkörper (12), der die zweite Wärmebarriereschicht (8) umschließt und im Längsschnitt eine Abfolge von ersten Erhebungen (14) und ersten Vertiefungen (16) aufweist, die mit geraden Verbindungsabschnitten miteinander verbunden sind;
wobei eine radiale Dicke (20) der ersten hitzebeständigen Schicht (6) zwischen 7 mm und 23 mm liegt und wobei das flexible vorisolierte Rohr (1) umfasst:
- einen oder mehrere elektrische Leiter (30), die sich entlang der Längsachse (X) erstrecken und in der ersten hitzebeständigen Schicht (6) und/oder in der zweiten Wärmebarriereschicht (8) aufgenommen sind, wobei der eine oder die mehreren elektrischen Leiter (30) Teil eines Leckageerkennungssystems sind;
wobei ein oder zwei elektrische Leiter (30) in der ersten hitzebeständigen Schicht (6) oder in der zweiten Wärmebarriereschicht (8) untergebracht sind, und wobei die Trennwand (10) von Perforationen oder Mikroperforationen (32) durchzogen ist, so dass der elektrische Leiter oder die elektrischen Leiter (30) von dem aus dem inneren Rohrkörper (2) ausströmenden erhitzten Fluid und von einer durch den äußeren Rohrkörper (12) einströmenden Flüssigkeit erreicht werden können.

2. Das flexible vorisolierte Rohr (1) gemäß dem vorherigen Anspruch, wobei die radiale Dicke (20) zwischen 8 mm und 21 mm, vorzugsweise zwischen 9 mm und 19 mm und noch bevorzugter zwischen 9,5 mm und 18 mm liegt.

3. Das flexible vorisolierte Rohr (1) gemäß dem vorherigen Anspruch, wobei das erwärmte Fluid im Durchflusskanal (4) eine Temperatur von mindestens 120°C aufweist, vorzugsweise im Bereich von 120°C bis 150°C liegt, und wobei die radiale Dicke (20) so gewählt ist, dass ein Temperaturgradient durch die radiale Dicke (20) 20°C oder mehr beträgt, vorzugsweise im Bereich von 20°C bis 50°C liegt.

4. Das flexible vorisolierte Rohr (1) gemäß einem der vorherigen Ansprüche, wobei, wenn das Rohr (1) zu Spulen mit einem Krümmungsradius gewickelt ist, der einen inneren Spulendurchmesser im Bereich von 0,8 m bis 4,0 m, vorzugsweise im Bereich von 1,0 m bis 3,0 m, noch bevorzugter zwischen 1,0 m und 2,8 m umschließt, das expandierte duroplastische Polymer der ersten hitzebeständigen Schicht (6) von Rissen durchzogen ist und wobei die Trennwand (10) und/oder das expandierte Polyurethan der zweiten Wärmebarriereschicht (8) so angeordnet sind, dass sie diese Risse verschließen.

5. Das flexible vorisolierte Rohr (1) gemäß einem der vorherigen Ansprüche, wobei die Trennwand (10), vorzugsweise im Wesentlichen rohrförmig, von einer der ersten hitzebeständigen Schicht (6) zugewandte Innenfläche (22) und von einer der zweiten Wärmebarriereschicht (8) zugewandte Außenfläche (24) begrenzt ist, wobei die Innenfläche (22) und die Außenfläche (24) elektrostatisch aufgeladen sind, so dass die Schichten (6, 8) an den Flächen (22, 24) haften.

6. Das flexible vorisolierte Rohr (1) nach einem der vorherigen Ansprüche, wobei die Trennwand (10) im Längsschnitt abwechselnd zweite Erhebungen (26) und zweite Vertiefungen (28) aufweist, die über im Wesentlichen gerade Verbindungsabschnitte miteinander verbunden sind, wobei die zweiten Erhebungen (26) und die zweiten Vertiefungen (28) einen mechanischen Block gegen axiale Bewegungen zwischen der ersten hitzebeständigen Schicht (6) und der zweiten Wärmebarriereschicht (8) bilden.

7. Das flexible vorisolierte Rohr (1) gemäß einem der vorherigen Ansprüche, wobei der innere Rohrkörper (2) aus einem Metall, beispielsweise Eisen oder Stahl, besteht und entlang der Längsachse (X) gewellt ist.

8. Das flexible vorisolierte Rohr (1) gemäß einem der vorherigen Ansprüche, wobei die Trennwand (10) mindestens eine Metallschicht, vorzugsweise aus Aluminium, oder eine Ethylen-Vinylalkohol (EVOH)-Schicht umfasst, wobei diese Schicht vorzugsweise in zwei Schichten, einer inneren Schicht und einer äußeren Schicht, aus Polyethylen (PE) oder Polypropylen (PP) eingebettet ist.

9. Das flexible vorisolierte Rohr (1) gemäß einem der vorherigen Ansprüche, wobei mindestens zwei elektrische Leiter (30) parallel zur Längsachse (X) miteinander verflochten oder gewickelt sind.

10. Das flexible vorisolierte Rohr (1) nach einem der vorherigen Ansprüche, umfassend mindestens eine Zugstange, der ein Paar elektrischer Leiter (30) zugeordnet ist, wobei die Zugstange ein elastisch verformbares Element bildet, das sich aufgrund der auf sie einwirkenden Zugkräfte ausdehnen kann und dadurch die auf die elektrischen Leiter (30) einwirkenden Zugkräfte teilweise reduziert.

11. Das flexible vorisolierte Rohr (1) gemäß einem der vorstehenden Ansprüche, wobei das expandierte duroplastische Polymer der ersten hitzebeständigen Schicht (6) expandiertes Polyisocyanurat ist.

12. Das flexible Flexibles vorisoliertes Rohr (1) gemäß einem der Ansprüche 1-10, wobei das expandierte duroplastische Polymer der ersten hitzebeständigen Schicht (6) expandiertes Phenolharz ist.

## Revendications

1. Tuyau flexible pré-isolé (1) comprenant :
- au moins un corps tubulaire intérieur (2) qui s'étend autour d'un axe de développement longitudinal (X) de manière à délimiter un conduit d'écoulement traversant (4) pour un fluide chauffé ;
- une première couche résistante à la chaleur (6), constituée d'un polymère thermodurcissable expansé, qui entoure le corps tubulaire intérieur (2) de manière prédominante ou sensiblement complète ;
- une deuxième couche de barrière thermique (8), au moins partiellement constituée de polyuréthane expansé, qui entoure la première couche résistante à la chaleur (6) ;
- une paroi de séparation (10) entre la première couche résistante à la chaleur (6) et la deuxième couche de barrière (8) ;
- un corps tubulaire extérieur (12), qui enferme la deuxième couche de barrière thermique (8) et comprend - en coupe longitudinale - une alternance de premières crêtes (14) et de premières dépressions (16) reliées les unes aux autres par des sections de raccordement rectilignes ;
dans lequel une épaisseur radiale (20) de la première couche résistante à la chaleur (6) est comprise entre 7 mm et 23 mm et dans lequel ledit tuyau flexible pré-isolé (1) comprend :
- un ou plusieurs conducteurs électriques (30) qui s'étend ou s'étendent le long de l'axe de développement longitudinal (X) et sont reçus dans la première couche résistante à la chaleur (6) et/ou dans la deuxième couche de barrière thermique (8), ledit ou lesdits conducteurs électriques (30) faisant partie d'un système de détection de fuites ;
un ou deux conducteurs électriques (30) étant logés dans la première couche résistante à la chaleur (6) ou dans la deuxième couche de barrière thermique (8), et dans lequel la paroi de séparation (10) est traversée par des perforations ou des microperforations (32), de sorte que ledit conducteur électrique ou lesdits conducteurs électriques peuvent être atteints par le fluide chauffé s'écoulant hors du corps tubulaire intérieur (2) et par un liquide pénétrant à travers le corps tubulaire extérieur (12).

2. Tuyau flexible pré-isolé (1) selon la revendication précédente, dans lequel ladite épaisseur radiale (20) est comprise entre 8 mm et 21 mm, de préférence comprise entre 9 mm et 19 mm, de manière encore plus préférée comprise entre 9,5 mm et 18 mm.

3. Tuyau flexible pré-isolé (1) selon la revendication précédente, dans lequel ledit fluide chauffé dans ledit conduit d'écoulement traversant (4) présente une température égale ou supérieure à 120 °C, de préférence comprise entre 120 °C et 150 °C, et dans lequel ladite épaisseur radiale (20) est sélectionnée de telle sorte qu'un gradient de température à travers ladite épaisseur (20) soit égal ou supérieur à 20 °C, de préférence compris entre 20 °C et 50 °C.

4. Tuyau flexible pré-isolé (1) selon l'une quelconque des revendications précédentes, dans lequel - lorsque ledit tuyau (1) est enroulé en spires avec un rayon de courbure tel qu'il circonscrit un diamètre intérieur de spire compris entre 0,8 m et 4,0 m, de préférence compris entre 1,0 m et 3,0 m, de manière encore plus préférée compris entre 1,0 m et 2,8 m - ledit polymère thermodurcissable expansé de la première couche résistante à la chaleur (6) est traversé par des fissures, et dans lequel la paroi de séparation (10) et/ou le polyuréthane expansé de la deuxième couche de barrière thermique (8) sont agencés pour refermer lesdites fissures.

5. Tuyau flexible pré-isolé (1) selon l'une quelconque des revendications précédentes, dans lequel la paroi de séparation (10), de préférence sensiblement tubulaire, est délimitée par une surface intérieure (22) faisant face à la première couche résistante à la chaleur (6) et par une surface extérieure (24) faisant face à la deuxième couche de barrière thermique (8), dans lequel ladite surface intérieure (22) et ladite surface extérieure (24) sont chargées électrostatiquement de telle sorte que lesdites couches (6, 8) adhèrent auxdites surfaces (22, 24).

6. Tuyau flexible pré-isolé (1) selon l'une quelconque des revendications précédentes, dans lequel la paroi de séparation (10) comprend - en coupe longitudinale - une alternance de deuxièmes crêtes (26) et de deuxièmes dépressions (28) reliées les unes aux autres par des sections de raccordement sensiblement rectilignes, lesdites deuxièmes crêtes (26) et deuxièmes dépressions (28) formant un blocage mécanique contre des mouvements axiaux entre la première couche résistante à la chaleur (6) et la deuxième couche de barrière thermique (8).

7. Tuyau flexible pré-isolé (1) selon l'une quelconque des revendications précédentes, dans lequel le corps tubulaire intérieur (2) est constitué d'un métal, par exemple de fer ou d'acier, et celui-ci est ondulé le long de l'axe de développement longitudinal (X).

8. Tuyau flexible pré-isolé (1) selon l'une quelconque des revendications précédentes, dans lequel la paroi de séparation (10) comprend au moins une couche métallique, de préférence constituée d'aluminium, ou une couche d'éthylène-alcool vinylique (EVOH), ladite couche étant de préférence noyée dans deux couches - une couche intérieure et une couche extérieure - de polyéthylène (PE) ou de polypropylène (PP).

9. Tuyau flexible pré-isolé (1) selon l'une quelconque des revendications précédentes, dans lequel au moins deux conducteurs électriques (30) sont entrelacés ou enroulés les uns avec les autres parallèlement à l'axe de développement longitudinal (X).

10. Tuyau flexible pré-isolé (1) selon l'une quelconque des revendications précédentes, comprenant au moins un tirant auquel une paire de conducteurs électriques (30) est associée, dans lequel le tirant forme un élément élastiquement déformable apte à s'allonger sous l'effet d'efforts de traction qui lui sont appliqués, réduisant ainsi partiellement les efforts de traction agissant sur les conducteurs électriques (30).

11. Tuyau flexible pré-isolé (1) selon l'une quelconque des revendications précédentes, dans lequel ledit polymère thermodurcissable expansé de la première couche résistante à la chaleur (6) est du polyisocyanurate expansé.

12. Tuyau flexible pré-isolé (1) selon l'une quelconque des revendications 1 à 10, dans lequel ledit polymère thermodurcissable expansé de la première couche résistante à la chaleur (6) est de la résine phénolique expansée.
